# EUROPÄISCHE PATENTSCHRIFT

(11) **EP 2 669 513 B1**
(45) Veröffentlichungstag und Bekanntmachung des Hinweises auf die Patenterteilung: **20.06.2018**
(21) Anmeldenummer: 13002169.4
(22) Anmeldetag: 03.05.2013
(51) Int. Cl.: F03D 7/02

(54) **Verfahren zur Dämpfung von Torsionsschwingungen in einer Antriebsstrangkomponente**
Method for absorbing torsional vibrations in a drivetrain component
Procédé d'amortissement des oscillations de torsion dans un composant d'une transmission

(30) Priorität: 29.05.2012 DE 102012010420
(43) Veröffentlichungstag der Anmeldung: 04.12.2013
(73) Patentinhaber: ZF Friedrichshafen AG, 88046 Friedrichshafen (DE)
(72) Erfinder: Vath, Andreas, 63849 Leidersbach (DE); Grimm, Sebastian, 97070 Würzburg (DE); Freier, Christian, 97225 Zellingen (DE)

(56) Entgegenhaltungen:
- WO-A2-2011/072820
- US-A1- 2008 265 846
- CLEMENS JAUCH: "Transient and dynamic control of a variable speed wind turbine with synchronous generator", WIND ENERGY, Bd. 10, Nr. 3, 1. Januar 2007 (2007-01-01) , Seiten 247-269, XP055158691, ISSN: 1095-4244, DOI: 10.1002/we.220
- John Licari ET AL: "Comparison of the performance of two torsional vibration dampers considering model uncertainties and parameter variation", , 19. April 2012 (2012-04-19), XP055158682, Gefunden im Internet: URL:http://proceedings.ewea.org/annual2012 /allfiles2/1187_EWEA2012presentation.pdf [gefunden am 2014-12-15]

## Beschreibung

Die vorliegende Erfindung betrifft ein Verfahren zur Dämpfung von Torsionsschwingungen in einer Antriebsstrangkomponente, insbesondere einer Energieerzeugungsanlage, sowie eine Recheneinheit zu dessen Durchführung.

### Stand der Technik

Antriebsstränge, bestehend aus Komponenten, wie beispielsweise Getrieben, Kupplungen und Verbindungselementen (Wellen), sind wichtige Bestandteile u.a. verschiedener elektrischer Energieerzeugungsanlagen, wie z.B. von Windenergieanlagen, Wasserkraftanlagen etc. Der Antriebsstrang erfüllt die Aufgabe, eine mechanische Verbindung zwischen einem Antrieb (beispielsweise einem Rotor einer Windenergieanlage) und einem Abtrieb (beispielsweise einem entsprechenden Generator) herzustellen, über welche durch eine Drehbewegung Energie übertragen wird. Antriebsstrangkomponenten, wie Getriebe, dienen dazu, die Drehzahl und das Drehmoment, die am Antrieb anliegen, auf Werte zu übersetzen, die dem Arbeitsbereich des Generators entsprechen. Kupplungen werden bei Bedarf für eine Trennung zwischen An- und Abtrieb genutzt und Wellen stellen die mechanische Verbindung zwischen den beteiligten Komponenten her. Auch weitere Komponenten, wie mechanische Bremsen oder dergleichen, können im Antriebsstrang integriert sein.

Da die beteiligten Komponenten nicht beliebig starr gefertigt werden können, sondern eine endliche Steifigkeit besitzen, können sie zu Eigenschwingungen angeregt werden. Eine solche Anregung kann beispielsweise durch eine nicht konstante Eingangsleistung (bei Windenergieanlagen beispielsweise durch Windstöße oder Windturbulenzen), durch äußere Störungen oder durch Eigenbewegungen anderer Anlagekomponenten erfolgen. Auch Schwingungen anderer Herkunft können in Schwingungen im Antriebsstrang resultieren, bei einer Windenergieanlage beispielsweise Turmschwingungen oder Schwingungen aufgrund der Zahneingriffe eines Getriebes.

Schwingungen wirken sich nachteilig auf die Lebensdauer der beteiligten Komponenten, insbesondere des Getriebes, aus. Stetige Schwellbelastungen erhöhen den Verschleiß der betroffenen Bauteile und führen zu kürzeren Austauschintervallen, was eine finanzielle und technische Belastung für den Anlagen- und Netzbetreiber bedeutet und den Anlagenertrag vermindert. Insbesondere unter dem Gesichtspunkt der voraussichtlich zunehmenden Verbreitung von Windenergieanlagen im Offshore-Bereich in absehbarer Zukunft spielt dieser Aspekt eine immer größere Rolle, da der Austausch beschädigter Komponenten dort weiter erschwert wird. Es ergibt sich daher das Ziel, diese Schwingungen zu reduzieren, um die Lebensdauer der Komponenten zu erhöhen.

Zur Vermeidung von Schwingungen können Generatoren verwendet werden, deren Last einstellbar ist. Bei dem Generator kann es sich dabei beispielsweise um einen doppeltgespeisten Asynchrongenerator handeln, der statorseitig direkt mit dem Netz verbunden und läuferseitig über einen Gleichspannungszwischenkreis versorgt wird, wodurch dem Läufer Spannungen und Ströme unterschiedlicher Frequenz und Amplitude aufgeprägt werden können. Auch Synchrongeneratoren, die über Stromrichter mit Gleichstromzwischenkreis ans Netz geschaltet werden und dementsprechend einstellbar sind, werden im Stand der Technik verwendet. Durch die genannten Stellmöglichkeiten kann dem Generator ein Moment vorgegeben werden, das an die schadenverursachenden Schwingungen angepasst ist, wodurch es diese verringert und das im Antriebsstrang anliegende Torsionsmoment entsprechend dämpft.

So ist aus der DE 10 2007 019 907 B4 ein Verfahren bekannt, das anhand der Generatordrehzahl über ein schwingungsfähiges Verzögerungselement eine Regeldifferenz bildet, woraus ein Korrekturmoment für eine Generatorsteuerung bestimmt wird.

Ein ähnlicher Ansatz wird in der US 2008/0067815 verfolgt, wonach aus Änderungen in der Generatordrehzahl ein Signal erzeugt wird, durch das eine Dämpfung über das Generatorstellmoment realisiert wird.

Als nachteilig an diesen Lösungen ist anzusehen, dass die schadenverursachenden Schwingungen des Torsionsmomentes nur mit einer eingeschränkten Genauigkeit ermittelt werden und demnach auch die Güte der Ausgleichsvorgänge begrenzt ist. Insbesondere die Ermittlung der Schwingungen aus der Drehzahl ist mit beträchtlichen Ungenauigkeiten behaftet.

In der DE 10 2009 059 669 A1 bzw. der WO 2011/072820 A2 wird beschrieben, aus einer Winkeldifferenz zwischen Rotor- und Generatorlage das im Antriebsstrang herrschende Torsionsmoment zu bestimmen und zu dämpfen. Hierzu muss jedoch die Steifigkeit des Antriebsstrangs sehr genau bekannt sein.

Aus Clemens Jauch: "Transient and dynamic control of a variable speed wind turbine with synchronous generator". Bd. 10, Nr. 3, 1. Januar 2007, Seiten 247-269, XP055158691 ist ein Verfahren zum Betreiben einer Windturbine bekannt, bei dem zum Dämpfen von Oszillationen auf eine Drehzahl geregelt wird.

Es ist daher wünschenswert, Torsionsschwingungen in einer Antriebsstrangkomponente möglichst einfach und effektiv zu dämpfen.

### Offenbarung der Erfindung

Erfindungsgemäß wird ein Verfahren mit den Merkmalen des Patentanspruchs 1 vorgeschlagen. Vorteilhafte Ausgestaltungen sind Gegenstand der Unteransprüche sowie der nachfolgenden Beschreibung.

Wenngleich die vorliegende Erfindung im Rahmen dieser Anmeldung vornehmlich in Bezug auf Windenergieanlagen beschrieben wird, ist sie keinesfalls auf Windenergieanlagen oder Einrichtungen zur Energieerzeugung beschränkt, sondern prinzipiell bei allen Vorrichtungen einsetzbar, bei denen Torsionsschwingungen von Wellen, Achsen und dergleichen, insbesondere auch von Wellen und Achsen mit zwischengeschalteten Getrieben, auftreten können.

### Vorteile der Erfindung

Im Rahmen der Erfindung wird eine Möglichkeit vorgestellt, wie Torsionsschwingungen in einer Antriebsstrangkomponente einfach und effektiv gedämpft werden können. Die Erfindung kommt besonders vorteilhaft mit einfachen Drehzahlmessungen aus, wofür in den meisten Anlagen ohnehin Sensoren vorhanden sind oder leicht nachgerüstet werden können. Eine Steifigkeit muss nicht bekannt sein. Die Lösung ist robust gegen Unsicherheiten im mathematischen Modell des Antriebsstrangs.

Durch Veränderung einer ausgangsseitigen Last wird die Drehzahldifferenz zwischen Eingangswelle und Ausgangswelle der Antriebsstrangkomponente, insbesondere eines Getriebes, auf einen Sollwert geregelt, insbesondere auf null (bei einem Übersetzungsverhältnis von 1 bzw. bei Normierung der gemessenen Drehzahlen mit dem Übersetzungsverhältnis) bzw. auf einen dem Übersetzungsverhältnis des Getriebes entsprechenden Wert. Es wird zweckmäßigerweise ein Regelkreis gebildet mit der Drehzahldifferenz als Regelgröße und einem additiven Lastwert für die ausgangsseitige Last als Steuergröße.

Die Drehzahldifferenz kann besonders einfach gemessen werden, was besondere Vorteile entfaltet. Zum einen werden Schwingungen über der gesamten Antriebsstrangkomponente erfasst, wodurch sie effektiv durch Eingriffe auf die Last gedämpft werden können. Zum anderen stellt die Drehzahldifferenz eine zur zeitlichen Ableitung des Torsionsmoments proportionale Größe dar, weshalb eine zusätzliche Differentiation des Messsignals aus Gründen schnellerer Reglerreaktion (wie im Stand der Technik verbreitet) nicht erforderlich ist. Der Nachteil einer nachträglichen Differentiation des Messsignals liegt in der zwangsläufigen Verstärkung von Messrauschen, was sich negativ auf die Qualität des generierten Stellsignals und somit auf die Regelgüte auswirkt.

Ein für die Erfindung geeigneter Regler kann vorteilhaft durch einen einfachen Proportionalregler ("P-Regler") realisiert werden. Weiter vorzugsweise werden zusätzliche drehzahladaptive und nichtadaptive Filter eingesetzt, die zu einer deutlichen Verbesserung der Regelgüte führen. Insbesondere können damit anregende Zahneingriffsfrequenzen aus dem Zahnkontakt in der Antriebsstrangkomponente ausgefiltert werden, welche andernfalls ebenfalls verstärkt würden, was zu hochfrequenten Momentenverläufen am Generator und somit auch zu hochfrequenten Schwankungen einer von dem Generator erzeugten Leistung führen würde. Vorteilhafte Filter sind insbesondere Kerbfilter ("notch filter"), also schmalbandige Sperrfilter, deren Sperrfrequenz auf ein Vielfaches einer gemessenen Drehzahl im Antriebsstrang adaptiert wird. Das jeweilige Vielfache wird zweckmäßigerweise entsprechend der in der Antriebsstrangkomponente, z.B. Getriebe, auftretenden Zahneingriffsfrequenzen bestimmt.

In weiteren Ausführungsformen kann statt der Drehzahldifferenz auch eine Beschleunigungsdifferenz gemessen und durch Integration die Drehzahldifferenz ermittelt werden. Hierbei bietet es sich an, am jeweiligen Messort, beispielsweise getriebeeingangsseitig auf der Hauptwelle der Windenergieanlage, mindestens zwei Sensoren anzubringen, um Störsignale, wie Gravitation oder Biegeschwingungen, zu kompensieren und so für die Regelung unsichtbar zu machen.

Wenngleich die Erfindung im Wesentlichen unter Bezug auf Drehzahlen beschrieben wird, ist sie in gleicher Weise auch für Torsionsmomente bzw. deren Differenzen geeignet. Insbesondere die Messung von Torsionsmomenten, beispielsweise durch Dehnmessstreifen, kann hier vorteilhaft eingesetzt werden. Es ist denkbar, ein Torsionsmoment oder eine Differenz des Torsionsmoments am Getriebeeingang und am Getriebeausgang zu bilden und dem Regler zur Verfügung zu stellen.

Zur Messsignalerfassung stehen mehrere Möglichkeiten zur Verfügung. In Energieerzeugungsanlagen ist in der Regel die Drehzahl auf der An- und/oder der Abtriebsseite bekannt. Auf Antriebsseite, beispielsweise bei dem Rotor einer drehzahlvariablen Windenergieanlage, wird sie durch Drehzahlgeber aufgenommen und an den Anlagenregler übergeben, welcher auf Grundlage dieses Werts den Betrieb der Anlage steuert oder regelt. Auf Generatorseite kann die Drehzahl aus elektrischen Größen im Generator abgeleitet werden, sofern sie nicht ebenfalls über einen Drehzahlgeber ermittelt wird. Bei einigen Anlagen ist es üblich, die Drehzahl nur auf Generatorseite zu ermitteln und in die Anlagensteuerung bzw. -regelung einzuspeisen.

Im Rahmen dieser Anmeldung sei unter "Rotor" der beispielsweise durch Wasser oder Wind beaufschlagte und angetriebene Teil einer Energieerzeugungsanlage bezeichnet. Der mobile Teil des Generators wird hingegen mit dem Begriff "Läufer" bezeichnet.

Handelt es sich bei der ausgangsseitigen Last um einen Generator, kann als Drehzahl der Ausgangswelle die Generatordrehzahl verwendet werden, die über einen ohnehin vorhandenen Drehgeber am Generator gemessen werden kann. Der Vorteil liegt hierbei in der anschließenden sehr einfachen Auslegung des verwendeten Reglers, da es sich dann um ein sogenanntes kollokiertes System handelt, d.h. der Ort der Messung und des Stelleingriffs sind identisch. Dadurch entsteht bei proportionaler Messsignalrückführung und Vernachlässigung von zeitlichen Verzögerungen zwischen Messung und Stellgrößeneinwirkung stets ein stabiler geschlossener Regelkreis.

Wird die Auswertung des Drehgebers am Generator nicht in Betracht gezogen oder ist kein solcher Drehgeber vorhanden, so kann die Drehzahl der Ausgangswelle direkt durch zusätzliche Sensorik ermittelt werden. Es ist zu beachten, dass dann die in Energieerzeugungsanlagen häufig vorhandene Kupplung und Bremsscheibe zwischen Ausgangs- und Generatorwelle einen erheblichen Einfluss auf die Systemdynamik haben können. Sie sollten daher zweckmäßigerweise beim Reglerentwurf berücksichtig werden, wenn sie zusätzliche Eigenfrequenzen im Bereich der Reglerbandbreite hervorrufen. Man spricht dann aufgrund der verschiedenen Orte von Messsignal und Stellsignal von einem nicht-kollokierten System, das für einfache Regler kein stabiles Regelverhalten mehr garantiert. In diesen Fällen ist es vorteilhaft, modellbasierte Regler einzusetzen, da solche diese Effekte mit berücksichtigen können. Das hierfür benötigte mathematische Modell kann entweder auf Basis einer theoretischen Herleitung, einer Systemidentifikation anhand von Messsignalen oder aus Mehrkörper-Simulationen gewonnen werden. Auch die Kombination solcher Modellbildungsverfahren ist möglich.

Weiterhin bietet sich die Alternative, vorhandene Sensoren zu verwenden, um auf Beschleunigungen oder Torsionsmomente rotorseitig bzw. getriebeeingangsseitig zu schließen.

Für die Beschleunigungen kann beispielsweise auf Beschleunigungssensoren in Achsschränken bzw. Steuereinrichtungen von Pitchsystemen in der Rotornabe zurückgegriffen werden. Der Vorteil ist hier, dass solche Systeme zumeist aus Sicherheitsgründen integriert sind und somit bereits redundant, also in mehrfacher Ausführung zu Verfügung stehen. Aus der ermittelten Rotorbeschleunigung kann dann durch Integration wieder auf die Rotordrehzahl geschlossen werden.

Eine erfindungsgemäße Recheneinheit, z.B. ein Steuergerät einer Energieerzeugungsanlage, ist, insbesondere programmtechnisch, dazu eingerichtet, ein erfindungsgemäßes Verfahren durchzuführen. Die Recheneinheit ist als Einrichtung zur Messsignalverarbeitung und Reglersignalgenerierung insbesondere dazu eingerichtet, eine Last in einem Antriebsstrang in Abhängigkeit von einer Differenz zwischen einer Drehzahl der Eingangswelle und einer Drehzahl der Ausgangswelle einzustellen, insbesondere durch entsprechende Ansteuerung eines elektrischen Generators.

Als integrierte Ausführungsform für das vorgeschlagene Dämpfungskonzept wird ein mit Beschleunigungs-, Drehzahl- und/oder Torsionsmoment-Sensoren ausgestattetes Getriebe vorgeschlagen, das zusammen mit einer solchen Recheneinheit sich selbst intelligent an die Umgebung, beispielsweise die Windenergieanlage, adaptiert und Stellsignale für das Generatormoment und auch weitere mögliche Aktoren in der Windenergieanlage bereitstellt, um Schwingungen, welche die Lebensdauer des Getriebes verringern können, zu reduzieren.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figur 1: zeigt eine erste bevorzugte Ausführungsform einer erfindungsgemäßen Windenergieanlage.
- Figur 2: zeigt eine zweite bevorzugte Ausführungsform einer erfindungsgemäßen Windenergieanlage.

### Detaillierte Beschreibung der Zeichnung

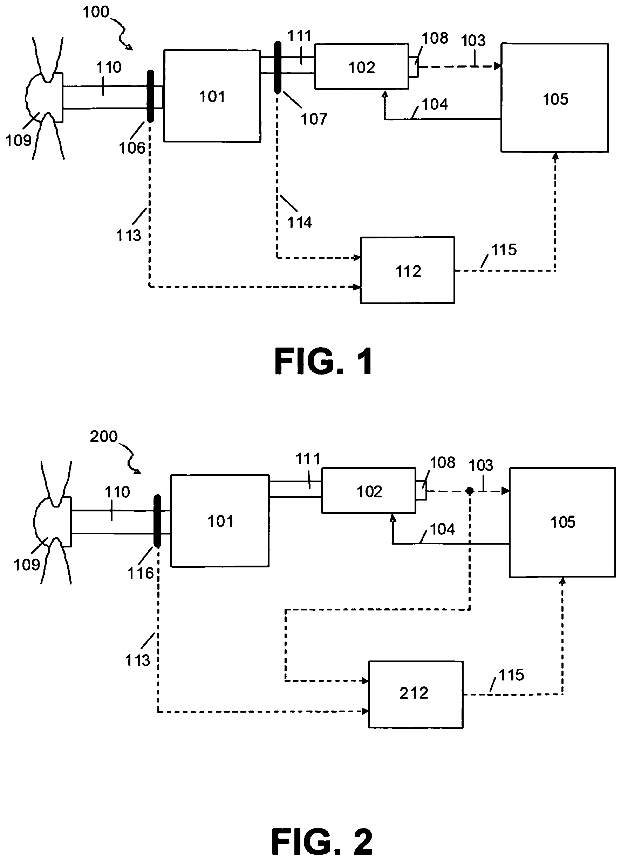

In den Figuren 1 und 2 werden gleiche Elemente mit gleichen Bezugsziffern bezeichnet. Dabei ist jeweils eine bevorzugte Ausführungsform einer erfindungsgemäßen Windenergieanlage schematisch in einem Blockdiagramm dargestellt und insgesamt mit 100 bzw. 200 bezeichnet.

Dargestellt sind ein Rotor 109 und ein Generator 102 einer Windenergieanlage 100, 200, die durch einen Antriebsstrang bestehend aus einer Rotorabtriebswelle 110, einem Getriebe 101, einer Welle 111 ggf. mit Kupplung mechanisch miteinander verbunden sind. Der Rotor ist an einem rotorseitigen Ende des Antriebsstrangs, der Generator an einem generatorseitigen Ende angebracht. Der Generator 102 ist mit einem Drehzahlsensor 108 (Drehgeber) ausgerüstet, der die Generatordrehzahl 103 erfasst und an eine Recheneinheit 105, die für die Steuerung der Windenergieanlage eingerichtet ist und daher als "Anlagensteuerung" bezeichnet wird, überträgt. Die Anlagensteuerung 105 ist dazu eingerichtet, die Leistungsabnahme des Generators 102 über Stellsignale 104, welche insbesondere einen Stromrichter und/oder einen Läufer des Generators entsprechend ansteuern, zu beeinflussen.

In Figur 1 ist eingangsseitig des Getriebes ein erster Sensor 106 und ausgangsseitig ein zweiter Sensor 107 angeordnet, die jeweils ein Messsignal 113, 114 (insbesondere eine Reihe von Messwerten) erfassen und an eine Dämpfungsregelung 112 übertragen, in der ein Eingriff 115 für den Generator 102 bestimmt und an die Anlagensteuerung 105 übertragen wird. Insbesondere wird aus den erfassten Messsignalen 113 und 114 im Dämpfungsregler 112 als Eingriff ein additives Stellmoment 115 für den Generator berechnet und an die Anlagensteuerung 105 übergeben. Diese überlagert ein Soll-Lastmoment des Generators mit dem additiven Stellmoment. Das Soll-Lastmoment des Generators kann beispielsweise von einer Leistungs- und/oder Drehzahlregelung stammen, welche in Windenergieanlagen implementiert sein kann. Es sei darauf hingewiesen, dass die Dämpfungsregelung 112 in einer Ausführungsform als Teil der Anlagensteuerung 105 implementiert ist sein kann. Bei den Messsignalen 113 und 114 handelt es sich vorzugsweise um Drehzahlsignale, es kann sich jedoch auch um Beschleunigungssignale oder Torsionsmomentssignale handeln.

Der Dämpfungsregler 112 ist dazu eingerichtet, unter Berücksichtigung eines Übersetzungsverhältnisses des Getriebes 101 eine Drehzahldifferenz zwischen der Drehzahl 113 der Rotorabtriebswelle 110 als Eingangswelle des Getriebes 101 und der Drehzahl 114 der Welle 111 als Ausgangswelle des Getriebes 101 zu bestimmen. "Unter Berücksichtigung eines Übersetzungsverhältnisses" bedeutet, dass die Drehzahldifferenz theoretisch null ist. Der Dämpfungsregler 112 ist weiterhin dazu eingerichtet, diese Drehzahldifferenz auf einen Sollwert zu regeln, der vorzugsweise null ist. Es kann nämlich davon ausgegangen werden, dass Torsionsschwingungen über das Getriebe minimal sind, wenn keine Drehzahlabweichung besteht. Auf diese Weise kann eine Torsionsschwingung über eine Antriebsstrangkomponente, wie hier das Getriebe, gedämpft werden. Der Entwurf des Dämpfungsreglers erfolgt in diesem Fall vorzugsweise gemäß dem Ansatz für nicht-kollokierte Systeme und weist bspw. einen modellbasierten Regler auf. Anstelle der Drehzahldifferenz kann auch eine gemessene Torsionsmomentsdifferenz oder ein einzelnes gemessene Torsionsmoment auf null geregelt werden.

In Figur 2 ist eine Windenergieanlage 200 gezeigt, in der auf der Welle 111 kein Sensor vorhanden ist. Stattdessen wird die Generatordrehzahl 103 dem Dämpfungsregler 212 zugeführt.

Der Dämpfungsregler 212 ist nun dazu eingerichtet, unter Berücksichtigung der beteiligten Übersetzungsverhältnisse eine Drehzahldifferenz zwischen der Drehzahl 113 der Rotorabtriebswelle 110 als Eingangswelle des Getriebes 101 und der Drehzahl 103 des Generators 102 sozusagen als Ausgangswelle des Getriebes 101 zu bestimmen. Der Dämpfungsregler 212 ist weiterhin dazu eingerichtet, diese Drehzahldifferenz auf einen Sollwert zu regeln, der vorzugsweise null ist. Es kann nämlich davon ausgegangen werden, dass Torsionsschwingungen zwischen Getriebeeingangswelle und Generatorwelle minimal sind, wenn keine Drehzahlabweichung besteht. Auf diese Weise kann eine Torsionsschwingung über eine Antriebsstrangkomponente, wie hier das Getriebe zusammen mit der Generatorwelle, gedämpft werden. Der Entwurf des Dämpfungsreglers erfolgt in diesem Fall vorzugsweise gemäß dem Ansatz für kollokierte Systeme und weist bspw. einen P-Regler auf.

## Patentansprüche

1. Verfahren zur Dämpfung von Torsionsschwingungen in einer Antriebsstrangkomponente (101), insbesondere einem Getriebe, insbesondere in einer Energieerzeugungsanlage (100, 200), wobei die Antriebsstrangkomponente (101) eine Eingangswelle (110) und eine Ausgangswelle (111) aufweist, wobei eine ausgangsseitige Last (102) in dem Antriebsstrang in Abhängigkeit von einer Differenz zwischen einer Drehzahl (113) der Eingangswelle (110) und einer Drehzahl (114, 103) der Ausgangswelle (111) eingestellt wird,
**dadurch gekennzeichnet, dass** durch Einstellen der ausgangsseitigen Last (102) die Drehzahldifferenz auf einen Sollwert geregelt wird.

2. Verfahren nach Anspruch 1, wobei die Drehzahldifferenz unter Berücksichtigung eines Übersetzungsverhältnisses bestimmt wird, wobei der Sollwert null ist.

3. Verfahren nach einem der vorstehenden Ansprüche, wobei die Drehzahl (113) der Eingangswelle (110) und/oder die Drehzahl (114, 103) der Ausgangswelle (111), insbesondere mittels Sensoren (106, 107, 180) gemessen werden.

4. Verfahren nach einem der vorstehenden Ansprüche, wobei eine Beschleunigung der Eingangswelle (110) und/oder eine Beschleunigung der Ausgangswelle (111), insbesondere mittels Sensoren (106, 107, 180) gemessen werden.

5. Verfahren nach Anspruch 4, wobei die Beschleunigung der Eingangswelle (110) mittels wenigstens zweier Sensoren und/oder die Beschleunigung der Ausgangswelle (111) mittels wenigstens zweier Sensoren gemessen werden.

6. Verfahren nach einem der Ansprüche, wobei ein Bandsperrfilter, insbesondere ein Kerbfilter, verwendet wird, dessen Sperrfrequenz in Abhängigkeit von einer gemessenen Drehzahl im Antriebsstrang eingestellt wird.

7. Verfahren nach einem der vorstehenden Ansprüche, wobei als ausgangsseitige Last ein Lastmoment eines Generators eingestellt wird.

8. Verfahren nach Anspruch 7, wobei ein additives Stellmoment für das Lastmoment eingestellt wird.

9. Recheneinheit (112, 212, 105), die dazu eingerichtet ist, ein Verfahren nach einem der vorstehenden Ansprüche durchzuführen.

10. Antriebsstrangkomponente (101) mit einer Eingangswelle (110) und einer Ausgangswelle (111), mit einem ersten Sensor (106) zum Erfassen einer Drehzahl (113) oder Beschleunigung der Eingangswelle (110) und/oder einem zweiten Sensor (107) zum Erfassen einer Drehzahl (114, 103) oder Beschleunigung der Ausgangswelle (111), und einer Recheneinheit (112, 212, 105) nach Anspruch 9.

11. Energieerzeugungsanlage (100, 200), insbesondere Windenergieanlage, mit einer Recheneinheit (112, 212, 105) nach Anspruch 9 und/oder einer Antriebsstrangkomponente (101) nach Anspruch 10.

## Claims

1. Method for damping torsional oscillations in a drive train component (101), in particular a gearbox, in particular in a power production plant (100, 200), wherein the drive train component (101) has an input shaft (110) and an output shaft (111), wherein a load (102) on the output side in the drive train is adjusted as a function of a difference between a rotational speed (113) of the input shaft (110) and a rotational speed (114, 103) of the output shaft (111), **characterized in that** the rotational speed difference is regulated to a set point by adjusting the load (102) on the output side.

2. Method according to Claim 1, wherein the rotational speed difference is determined while taking into account a transmission ratio, the set point being zero.

3. Method according to one of the preceding claims, wherein the rotational speed (113) of the input shaft (110) and/or the rotational speed (114, 103) of the output shaft (111) are measured, in particular by means of sensors (106, 107, 180).

4. Method according to one of the preceding claims, wherein an acceleration of the input shaft (110) and/or an acceleration of the output shaft (111) are measured, in particular by means of sensors (106, 107, 180).

5. Method according to Claim 4, wherein the acceleration of the input shaft (110) is measured by means of at least two sensors and/or the acceleration of the output shaft (111) is measured by means of at least two sensors.

6. Method according to one of the claims, wherein a band blocking filter, in particular a notch filter, is used, the blocking frequency of which is set as a function of a measured rotational speed in the drive train.

7. Method according to one of the preceding claims, wherein a load moment of a generator is adjusted as output-side load.

8. Method according to Claim 7, wherein an additive actuating moment for the load moment is adjusted.

9. Computing unit (112, 212, 105), which is designed to implement a method according to one of the preceding claims.

10. Drive train component (101) having an input shaft (110) and an output shaft (111), having a first sensor (106) for measuring a rotational speed (113) or acceleration of the input shaft (110), and/or a second sensor (107) for measuring a rotational speed (114, 103) or acceleration of the output shaft (111), and a computing unit (112, 212, 105) according to Claim 9.

11. Power production plant (100, 200), in particular a wind power plant, having a computing unit (112, 212, 105) according to Claim 9 and/or a drive train component (101) according to Claim 10.

## Revendications

1. Procédé d'amortissement d'oscillations de torsion dans un composant de chaîne cinématique (101), en particulier dans une transmission, en particulier dans une installation de production d'énergie (100, 200), dans lequel le composant de transmission (101) comporte un arbre d'entrée (110) et un arbre de sortie (111), dans lequel une charge côté sortie (102) dans la chaîne cinématique est réglée en fonction d'une différence entre une vitesse de rotation (113) de l'arbre d'entrée (110) et une vitesse de rotation (114, 103) de l'arbre de sortie (111),
**caractérisé en ce que** la différence de vitesse de rotation est régulée en ajustant la charge côté sortie (102) à une valeur de consigne.

2. Procédé selon la revendication 1, dans lequel la différence de vitesse de rotation est déterminée en tenant compte d'un rapport de transmission, dans lequel la valeur de consigne est égale à zéro.

3. Procédé selon l'une des revendications précédentes, dans lequel la vitesse de rotation (113) de l'arbre d'entrée (110) et/ou la vitesse de rotation (114, 103) de l'arbre de sortie (111) est mesurée, en particulier au moyen de capteurs (106, 107, 180).

4. Procédé selon l'une des revendications précédentes, dans lequel une accélération de l'arbre d'entrée (110) et/ou une accélération de l'arbre de sortie (111) est mesurée, en particulier au moyen de capteurs (106, 107, 180).

5. Procédé selon la revendication 4, dans lequel l'accélération de l'arbre d'entrée (110) est mesurée au moyen d'au moins deux capteurs et/ou l'accélération de l'arbre de sortie (111) est mesurée au moyen d'au moins deux capteurs.

6. Procédé selon l'une des revendications, dans lequel un filtre coupe-bande est utilisé, en particulier un filtre à encoche, dont la fréquence de coupure est réglée en fonction d'une vitesse de rotation mesurée dans la chaîne cinématique.

7. Procédé selon l'une des revendications précédentes, dans lequel un couple de charge d'une génératrice est réglé en tant que charge côté sortie.

8. Procédé selon la revendication 7, dans lequel un couple de réglage additif est réglé pour le couple de charge.

9. Unité de calcul (112, 212, 105) conçue pour mettre en oeuvre un procédé selon l'une des revendications précédentes.

10. Composant de chaîne cinématique (101) comportant un arbre d'entrée (110) et un arbre de sortie (111), un premier capteur (106) destiné à détecter une vitesse de rotation (113) ou une accélération de l'arbre d'entrée (110) et/ou un second capteur (107) destiné à détecter une vitesse de rotation (114, 103) ou une accélération de l'arbre de sortie (111), et une unité de calcul (112, 212, 105) selon la revendication 9.

11. Installation de production d'énergie (100, 200), en particulier installation d'énergie éolienne, comportant une unité de calcul (112, 212, 105) selon la revendication 9 et/ou un composant de chaîne cinématique (101) selon la revendication 10.
